# EUROPEAN PATENT APPLICATION

(11) **EP 4 094 558 A1**
(43) Date of publication of application: **30.11.2022**
(21) Application number: 22172369.5
(22) Date of filing: 09.05.2022
(51) Int. Cl.: A01B 69/04, G05D 1/02, G05D 1/00, A01B 69/00

(54) **METHOD AND SYSTEM FOR DRIVING VIEW-BASED AGRICULTURAL MACHINERY AND DEVICE FOR AGRICULTURAL MACHINERY APPLYING METHOD**

(30) Priority: 14.05.2021 CN 202110529974
(71) Applicant: FJ Dynamics Technology Co., Ltd, Xiangyang, Hubei 441100 (CN)
(72) Inventor: Wu, Di, Xiangyang, 441100 (CN); Yao, Yuan, Xiangyang, 441100 (CN); ZHAO, WENQUAN, Xiangyang, 441100 (CN); WANG, BO, Xiangyang, 441100 (CN); LI, HONGXIN, Xiangyang, 441100 (CN)
(74) Representative: Zaboliene, Reda

(57) **Abstract**

A view-based method for controlling the driving of agricultural machinery includes collecting ground information from images; identifying a target operation area according to the ground image information; determining a navigation route for the agricultural machinery within the target operation area; and determining whether the navigation route is reliable; detecting manual driving signal of the user and allowing manual driving of the agricultural machinery according to the manual driving signal if the navigation route is not reliable; and determining driving adjustment parameters for the navigation route and current driving attitude if the navigation route is found reliable. A system for driving agricultural machinery, a device applying the method, and a non-volatile storage medium are also disclosed.

## Description

### TECHNICAL FIELD

The present disclosure relates to the field of agriculture, in particular to a method and system for driving view-based agriculture machinery, and device applying method.

### BACKGROUND

Control of agricultural machinery is dominated by manual driving. Technologies such as Beidou satellite positioning and LIDAR have also been introduced into agricultural machinery operations to realize automatic driving. At present, agricultural machinery mainly uses automatic driving based on the global satellite positioning system (including but not limited to Beidou, GPS, GLONASS, etc.) and ground augmentation stations, with accurate positioning and accurate navigation operations. However, satellite navigation operations are limited by the constraints of the operating terrain and environment. For complex areas of land, effective full-coverage operations cannot be carried out. Infrared, ultrasonic, and LIDAR sensors provide some assistance. These methods can improve the navigation effect to a certain extent. However, when the navigation accuracy too reduced to be navigated, there is no corresponding discovery and treatment, which can easily lead to accidents

Therefore, improvement is desired.

### SUMMARY OF THE INVENTION

The present disclosure provides a method and system for driving view-based agriculture machinery, a device on an agricultural machine, and a non-volatile storage medium. The method of the present disclosure can reduce accidents caused by automatic driving, the present disclosure further can seamlessly switch from automatic to manual driving when automatic driving cannot be carried out, does not affect the normal operation of the agricultural machinery, and improves the operation efficiency of the agricultural machinery.

In order to achieve this purpose, on one hand, the embodiment of the present disclosure provides a view-based agriculture machinery driving method, the method may include:
collecting ground information by means of images captured;
identifying a target operation area according to the ground image information;
determining navigation route of the agricultural machinery based on the target operation area; and
determining whether the navigation route is reliable;
detecting manual driving signal of the user and controlling the driving of the agricultural machinery according to the manual driving signal if the navigation route is not reliable; and
determining driving adjustment parameters according to the navigation route and current driving attitude of the agricultural machine and controlling the driving of the agricultural machine according to the driving adjustment parameters if the navigation route is reliable.

Alternatively, in some embodiments, the identifying of a target operation area according to the ground image information may include:
segmenting the ground image information through a preset deep learning model to obtain a plurality of ground areas, and identifying the target operation area in the plurality of ground areas.

Alternatively, in some embodiments, the identifying of a target operation area according to the ground image information may include:
determining whether the ground image information meets identification requirements; and
obtaining GPS as to position of the agricultural machinery and identifying the target operation area according to the GPS positioning information and the ground image information if the ground image information does not meet the identification requirements.

Alternatively, in some embodiments, determining whether the ground image information meets identification requirements may include:
determining whether information as to ground features of the ground image information is accurate and continuous; and
determining that the ground image information does not meet the identification requirements if the ground feature information of the ground image information is inaccurate or not continuous.

Alternatively, in some embodiments, determining whether the navigation route is reliable may include:
determining whether the navigation route traverses the target operation area and whether it will allow completion of an operation task corresponding to the target operation area;
determining that the navigation route is reliable if the navigation route traverses the target operation area and if it will allow completion of the operation task corresponding to the target operation area.

Alternatively, in some embodiments, determining the driving adjustment parameters according to the navigation route and current driving attitude of the agricultural machine may include:
detecting current path of the agricultural machinery;
determining any deviation between the current path and the navigation route, and
determining a driving steering angle and offset distance of the agricultural machine based on deviation found and the driving parameters of the agricultural machine.

Alternatively, in some embodiments, the method further includes:
determining whether there is an end-of-path sign in the ground image information, or determining when the agricultural machine has reached an end position of the navigation route; and
controlling the agricultural machine to stop working if an end-of-path sign is reached in the ground image information, or when the agricultural machine reaches an end position of the navigation route.

On another hand, the embodiment of the present disclosure provides a view-based agriculture machinery system method, the system may include:
an image acquisition module is configured to collect ground image information;
an operation area identification module is configured to identify a target operation area according to the ground image information;
a navigation route determination module is configured to determine navigation route of the agricultural machinery within the target operation area; and
a reliability determination module is configured to determine whether the navigation route is reliable;
a manual driving module can detect manual takeover and corresponding driving signal of the user and controlling the driving of the agricultural machinery to be manual if the navigation route is not reliable; and
an automatic driving module is configured to determine driving adjustment parameters according to the navigation route and current driving attitude of the agricultural machine and if the navigation route is reliable controlling the driving of the agricultural machine according to the driving adjustment parameters.

On another hand, the embodiment of the present disclosure provides a device for mounting on an agricultural machine, the device may include one or more processors and a storage device for storing one or more programs, and when the one or more programs are executed by the one or more processors, the one or more processors realize the view-based agricultural machinery driving method provided by any embodiment of the present disclosure.

On another hand, the embodiment of the present disclosure provides a computer readable storage medium, the computer readable storage medium stores a computer program, when the computer program is executed by the processor, the view-based agricultural machinery driving method provided by any embodiment of the present disclosure is realized.

Under the present disclosure, the ground image information as to the land environment around the agricultural machinery during the operation of agricultural machinery, identify the target operation area for carrying out the operation of the agricultural machinery according to the ground image information, determines the navigation route of the agricultural machinery according to the identified target operation area, and switches to and from manual driving and automatic driving, according to whether the navigation route is reliable. When the navigation route is determined to be reliable, the manual driving signal of the user is detected and the driving of the agricultural machinery is done manually according to the manual driving signal. When the navigation route is determined to be unreliable, the driving adjustment parameters are determined according to the navigation route and the current driving attitude of the agricultural machinery, so as provide automatic control of the driving of the agricultural machinery according to the driving adjustment parameters. The method can plan the navigation route according to the collected ground image information in the process of the agricultural machinery operation, so as to carry out automatic driving operation, and make determinations as to reliability of navigation in the process of automatic driving. When the navigation route is found unreliable, it can be seamlessly switched to manual driving in time, which reduces the accidents caused by automatic driving to a certain extent. Normal operation of the agricultural machinery is not affected, and the operational efficiency of the agricultural machinery is improved.

### BRIEF DESCRIPTION OF THE DRAWINGS

FIG. 1 is a flowchart of a view-based method for providing automatic or manual driving of agricultural machinery as may be optimal from time to time according to a first embodiment of the present disclosure.
FIG. 2 is another flowchart of the view-based agricultural machinery driving method according to the first embodiment of the present disclosure.
FIG. 3 is a flowchart of the view-based agricultural machinery driving method according to a second embodiment of the present disclosure.
FIG. 4 is another flowchart of the view-based agricultural machinery driving method according to the second embodiment of the present disclosure.
FIG. 5 is a schematic diagram of a view-based agricultural machinery driving system according to an embodiment of the present disclosure.
FIG. 6 is a schematic diagram of a device for mounting to agricultural machinery according to an embodiment of the present disclosure.

### DETAILED DESCRIPTION

The following description discloses the present disclosure so that those skilled in the art can implement the present disclosure. The preferred embodiments in the following description are only examples, and those skilled in the art can think of other obvious variations. In addition, it should be noted that, for ease of description, only some but not all structures related to the present disclosure are shown in the drawings.

Before discussing the exemplary embodiments in more detail, it should be mentioned that some exemplary embodiments are described as processes or methods depicted as flowcharts. Although the flowchart describes the steps as sequential processing, many of them can be implemented in parallel, concurrently, or at the same time. In addition, the order of the steps can be rearranged. When its operation is completed, the process may be terminated, but may also have additional steps not included in the drawings. Processing can correspond to methods, functions, procedures, subroutines, subroutines, and so on.

In addition, the terms "first", "second" and the like may be used herein to describe various directions, actions, steps or elements, but these directions, actions, steps or elements are not limited by these terms. These terms are used only to distinguish a first direction, action, step, or element from another direction, action, step, or element. For example, without limiting the scope of the present disclosure, the first module can be called the second module. Similarly, the second module can be called the first module. Both the first module and the second module are modules, but they are not the same module. The terms "first", "second", etc. cannot be understood as indicating or implying relative importance or implicitly indicating the number of indicated technical features. Thus, the features defining "first" and "second" may explicitly or implicitly include one or more of the features. In the description of the embodiment of the present disclosure, "a plurality of" means at least two, such as two, three, etc., unless otherwise specifically defined.

### Embodiment 1

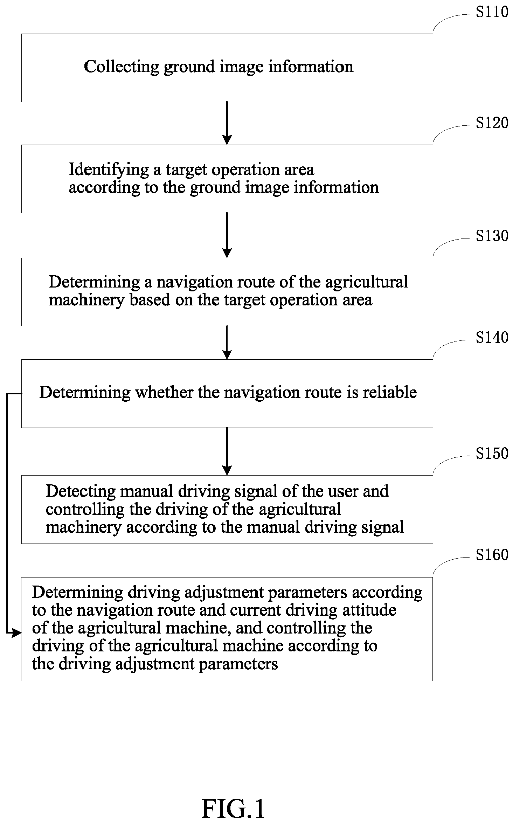

FIG. 1 illustrates a view-based agricultural machinery driving method in accordance with an embodiment of the present disclosure. The method can be applied to the driving system of various agricultural machinery to lead or assist the driving of agricultural machinery. For example, the view-based agricultural machinery driving method of the embodiment of the present disclosure can be applied to grain harvesters, seed planters, plant sprayers and fertilizer spreaders, tractors, and other farmland devices.

As shown in FIG. 1, the method includes the following steps:
At step S110, collecting ground information from images.

The ground image information is collected by an image acquisition module to determine the current working environment of an agricultural machinery. The image acquisition module is usually set on the agricultural machinery to collect images based on known preset angle. The known preset angle mentioned here allows correlation to be made between the location and position of the agricultural machinery and the collected ground image information, so as to facilitate the determination of the actual position of the agricultural machinery, it can be determined by the actual orientation (for example, if the image acquisition module is set on the agricultural machinery, it needs to be determined in combination with the orientation of the agricultural machinery and the orientation of the image acquisition module on the agricultural machinery) and fixed shooting angle of the image acquisition module (for example, setting up an image acquisition module on the agricultural machinery, and fixing the aim of the image acquisition module to one or more shooting angles relative to the agricultural machinery).

In the embodiment, the image acquisition module is a camera (the specific model of the camera is not limited). One or more cameras are set on the agricultural machinery to collect the ground image information around the agricultural machinery during the operation of the agricultural machinery. The camera may be fixed in front of or on the side of the agricultural machinery, and the lens of the camera may face the driving direction of the agricultural machinery, the optical axis of the lens being at a fixed angle with the ground. The 3D space conversion relationship of the camera installation position is stored in the agricultural machinery. More specifically, the one or more cameras can collect the ground image on the agricultural machinery based on one or more fixed angles (relative to the agricultural machinery), so as to cover a wider shooting angle and obtain more comprehensive ground image information.

At step S120, identifying a target operation area according to the ground image information.

The target operation area refers to the area where agricultural machinery is required to operate, such as farmland to be harvested. The ground image information includes a farmland area and a background of the farmland area. Taking the grain harvester as an example, the grain harvester will continuously capture the ground image information through its camera during driving. The captured ground image information includes a planting area of the farmland, a division area between adjacent planting areas, and non-farmland areas such as the sky. The planting area can be further divided into an operable area and a non-operable area, and the non-operated area is the target operation area referred to in the embodiment. The target operation area is the actual land on which operation tasks of the agricultural machinery are carried out, so as to facilitate the subsequent control of the agricultural machinery to traverse the target operation area to complete the operation.

In the embodiment, the agricultural machinery includes a processing module, the processing module can adopt on-board computer. The processing module stores relevant algorithms or models for processing the ground image to identify the features in the image, segments the image according to the recognized features to obtain different regions, and then identifies the target operation area.

At step S130, determining a navigation route of the agricultural machinery based on the target operation area.

The navigation route is a predicted route for planning the path of the agricultural machinery, which is used to guide agricultural machinery to traverse all target operation areas and complete operation tasks. The navigation route needs to be determined according to the specific target operation area and the operation task of the agricultural machinery. For example, when a grain harvester works, the target operation area determined based on the ground image information includes a planting area extending along the forward direction of the agricultural machine, the planting area is rectangular. When the grain harvester only needs to harvest from one side of the planting area (corresponding to the wide side of the rectangle) to the other side (moving along the long side of the rectangle) to complete the harvesting of the planting area, the determined navigation line is the center line of the target area. The above example is only a navigation route determination process in a relatively simple case. In fact, according to the increase of the complexity and shape of the target operation area and the complexity of the operation content, the determination method of the navigation route is also more complex, which needs to be set according to the specific needs, and the present disclosure is not limiting.

In the embodiment, after identifying the target operation area, the processing module of the agricultural machinery uses the preset vision algorithm to search the target operation area and predicts the navigation route of the agricultural machinery according to the specific operation task, so that the agricultural machinery can traverse the target operation area and complete the operation task according to the navigation route. The operation modes of the agricultural machinery include edge operation, bundled operation and between-rows operations. For different operation modes, the navigation route is determined in different ways. In some embodiments, the processing module is preset with a variety of algorithms to formulate navigation routes for different operation types. In order to further improve the automation of agricultural machinery, special algorithms can also be set in the processing module. The special algorithm is used to select the most suitable operation mode according to the ground image information and the operation tasks (such as harvesting and sowing) of the agricultural machinery.

At step S140, determining whether the navigation route is reliable. If the navigation route is reliable, step S160 is implemented, otherwise step S150 is implemented.

Since the navigation route is determined by algorithm, on the one hand, the actual agricultural operation environment is complex, on another hand, due to the possible limitations of the algorithm itself, it is not easy to make the target operation area geometrically neat and difficult to formulate the navigation route, or even if the navigation route is formulated, there is some possibility of error. For example, the actual operation put forward for the navigation route does not completely traverse the target operation area, or there may be accidents such as collision with obstacles when operating according to the navigation route, so the navigation route needs to be further verified.

The processing module includes a reliability verification algorithm to simulate the actual operation situation of the agricultural machinery according to the navigation route. If the agricultural machinery can traverse the target operation area according to the navigation route and complete the corresponding operation tasks, it is deemed to have passed the reliability verification, otherwise it will not pass. If the navigation route is not determined in step S130, it is directly determined that the navigation route is unreliable.

Determining whether the navigation route is reliable can include: determining whether the navigation route traverses the target operation area completely and whether the operation task in the target operation area can be carried out. If the navigation route traverses the target operation area completely and can complete the operation task corresponding to the target operation area, the navigation route is reliable.

At step S150, detecting manual driving signal of the user and controlling the driving of the agricultural machinery according to the manual driving signal.

The manual driving signal is generated by the user-driver. The manual driving operation includes remote driving operation (through remote control terminal operation) and actual direct driving by operator. When the processing module verifies that the navigation route is unreliable, it needs to switch to the manual driving mode, and the user drives manually. The agricultural machinery drives and operates according to the manual driving signals of the user.

The agricultural machinery includes a manual driving module, the manual driving module includes manual operation members (including steering wheel, etc.) and remote control components (including remote control terminal, etc.), so as to facilitate manual driving by the user, such as steering wheel and or remote control terminal, when the navigation route put forward by a computer is unreliable.

At step S160, determining driving adjustment parameters according to the navigation route and current driving attitude of the agricultural machine, and controlling the driving of the agricultural machine according to the driving adjustment parameters.

The driving adjustment parameters are used to control the automatic driving of the agricultural machinery according to the navigation route. The driving adjustment parameters include driving steering angle and offset distance. The driving steering angle is used to control the driving direction of the agricultural machinery, and the offset distance is used to determine the distance travelled by the agricultural machinery.

The agricultural machinery includes an automatic driving module (which can be a virtual module based on the processing module or a separate hardware module), the automatic driving module controls the agricultural machine to move according to the navigation route based on the current driving attitude of the agricultural machine after the processing module verifies that the navigation route is reliable. The automatic driving module determines how to steer the agricultural machine from a current driving track to the required navigation line according to the current driving attitude and the navigation route of the agricultural machine, and the driving adjustment parameters reflect the deviation that needs to be corrected between the current driving track and the navigation route.

The processing module can adopt a variety of ways when identifying the target operation area according to the ground image information, for example, threshold segmentation method, adding genetic algorithm, and particle swarm optimization algorithm to auxiliary segmentation method and image semantic segmentation method based on deep convolution neural network, and different methods have different advantages and disadvantages. In some embodiment, the image semantic segmentation method based on deep convolution neural network is preferred, the method has the advantages of fast recognition, high accuracy, and can be continuously optimized during actual use. In these embodiments, a preset depth learning model needs to be configured in the processing module, and the preset depth learning model is obtained through a large number of images of ground for training. The training ground images include ground images in various working environments, and the features used to realize image segmentation shall be marked on the training ground images (marked according to different ground areas of the ground image), based on the training ground image, the training times of the deep learning model are controlled according to the actual needs, and the preset deep learning model is obtained after the training. Accordingly, identifying the target operation area according to the ground image information includes: segmenting the ground image information through a preset depth learning model to obtain a plurality of ground areas, and identifying the target operation area in the plurality of ground areas.

The view-based agricultural machinery driving method of the embodiment of the present disclosure can collect the ground image information around the agricultural machinery during the operation of agricultural machinery, identify the target operation area that needs the operation of the agricultural machinery according to the ground image information, determine the navigation route of the agricultural machinery according to the identified target operation area, and switch between manual driving and automatic driving according to whether the navigation route is reliable at that moment. When the navigation route is determined to be reliable, the manual driving signal of the user is detected to control the driving of the agricultural machinery according to the manual driving signal. When the navigation route is determined to be unreliable, the driving adjustment parameters are determined according to the navigation route and the current driving attitude of the agricultural machinery, so as to automatically control the driving of the agricultural machinery according to the driving adjustment parameters. The method can plan the navigation route according to the collected ground image information in the process of the agricultural machinery operation, so as to carry out automatic driving operation, and introduce assessments of reliability in the process of automatic driving. When the navigation route is unreliable, it can be found and switched to manual driving in time, which reduces the accidents caused by automatic driving to a certain extent, and can be switched seamlessly when automatic driving cannot be carried out. This does not affect the normal operation of the agricultural machinery, and improves the operation efficiency of the agricultural machinery.

### Embodiment 2

The Embodiment 2 of the present disclosure further supplements and explains some contents in the Embodiment 1 on the basis of the Embodiment 1 of the present disclosure.

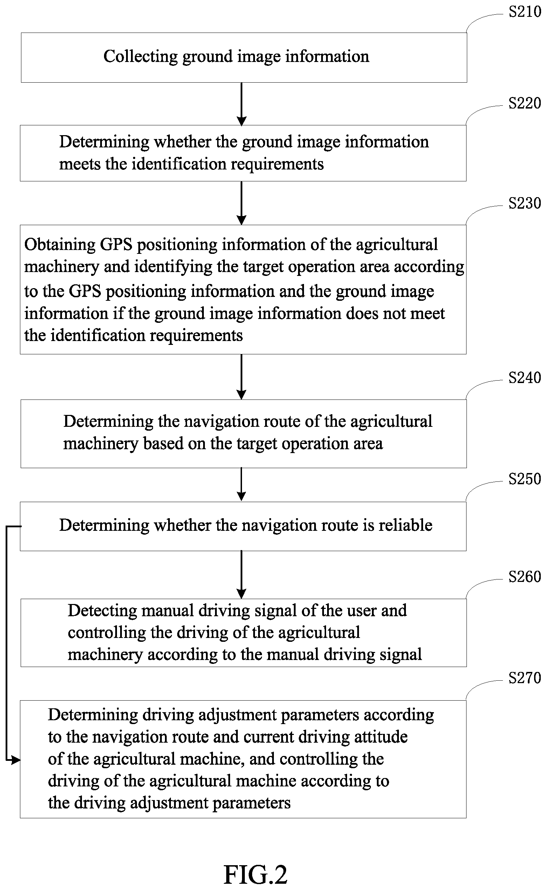

FIG. 2 illustrates a view-based agricultural machinery driving method in accordance with another embodiment of the present disclosure.

As shown in FIG. 2, the method includes the following steps:
At step S210, collecting ground image information.

At step S220, determining whether the ground image information meets the identification requirements.

Because the image acquisition module will be affected by weather and other factors, such as rain and snow, the clarity of the ground image information will be affected. Thus, identifying the target operation area according to the ground image information may not include obvious ground features, or the ground features may be discontinuous (for example, it is difficult to distinguish the target operation area when the snow covers the land). In special cases, it is necessary to introduce other technical means to assist in the identification of the target areas. Considering that the identification of the target operation area based on the ground image information is based on the ground features, when determining whether the ground image information meets the identification requirements, it is necessary to consider whether the ground features support the identification of the target operation area. The determining of whether the ground image information meets the identification requirements can include:

Determining whether the ground features information of the ground image information is accurate and continuous. If the ground features information of the ground image information is inaccurate or not continuous, the ground image information does not meet the identification requirements.

At step S230, obtaining GPS positioning information of the agricultural machinery and identifying the target operation area according to the GPS positioning information and the ground image information if the ground image information does not meet the identification requirements.

In the embodiment, when the ground image information does not meet the identification requirements, a global positioning system (GPS) positioning information is introduced to assist in the identification of the target operation area.

In the embodiment, the agricultural machinery further includes a satellite positioning module, the satellite positioning module is used to determine the GPS positioning information of the agricultural machinery, and modify and supplement the ground features information of the ground image information with the help of GPS positioning information, so as to make the ground features information of the ground image information accurate and continuous, and finally segment and identify the ground image based on the accurate and continuous ground features information, so as to determine the target operation area.

At step S240, determining the navigation route of the agricultural machinery based on the target operation area.

At step S250, determining whether the navigation route is reliable. If the navigation route is reliable, step S270 is implemented, otherwise step S260 is implemented.

At step S260, detecting manual driving signal of the user and allowing manual driving of the agricultural machinery according to the manual driving signal.

At step S270, determining driving adjustment parameters according to the navigation route and current driving attitude of the agricultural machine, and controlling the driving of the agricultural machine according to the driving adjustment parameters.

It should be noted that if it is determined in step S220 that the ground image information meets the identification requirements, the target operation area can be identified directly according to the ground image information without introducing the GPS positioning information. The other steps are consistent with steps S240-S270.

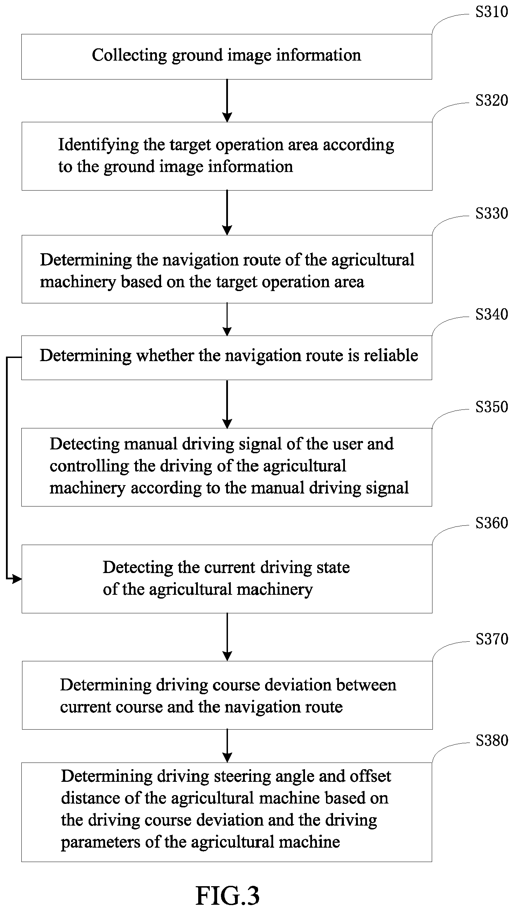

FIG. 3 illustrates a view-based agricultural machinery driving method in accordance with another embodiment of the present disclosure.

As shown in FIG. 3, the method includes the following steps:
At step S310, collecting ground image information.

At step S320, identifying the target operation area according to the ground image information.

At step S330, determining the navigation route of the agricultural machinery based on the target operation area.

At step S340, determining whether the navigation route is reliable. If the navigation route is reliable, step S360 is implemented, otherwise step S350 is implemented.

At step S350, detecting manual driving signal of the user and allowing manual driving of the agricultural machinery according to the manual driving signal.

At step S360, detecting the current situation of the agricultural machinery on the land.

In the field of automatic driving, in order to control the vehicle to travel along the expected path, there are two control objectives of lateral control, the two control objectives are the position and course of the vehicle. In order to control the course of the vehicle, the deviation between the expected course and the actual course must be known. In the embodiment, the expected course can be determined according to the navigation route, and the actual course is the current course of the agricultural machinery. Generally, the current course can be determined according to the orientation of the agricultural machinery, the orientation of the agricultural machinery in a certain direction is the current course of the agricultural machinery. The above is just an example, in fact, the moving direction of the agricultural machinery can also be taken as the current course.

At step S370, determining deviation between current course and the navigation route.

After determining the current course of the agricultural machinery, it is necessary to calculate the deviation between the current course and the driving course of the navigation route, the driving course deviation is actually the difference between the current course and the expected course put forward and corresponding to the navigation route.

At step S380, determining driving steering angle and offset distance of the agricultural machine based on the deviation and the driving parameters of the agricultural machine.

The deviation is only used to describe how to achieve the desired course of the navigation route, but the agricultural machinery is often not on the navigation route, so it is also necessary to synchronize the position. In the embodiment of the present disclosure, when considering the course synchronization according to the driving course deviation, it will also calculate how to move according to the driving parameters (including speed and current position) of the agricultural machinery to realize synchronization with the navigation route in position and course. The driving steering angle is used to determine the automatic driving direction of the agricultural machine, and the offset distance is used to determine how far the agricultural machine needs to be offset according to the driving steering angle, which can be synchronized with the navigation route in position.

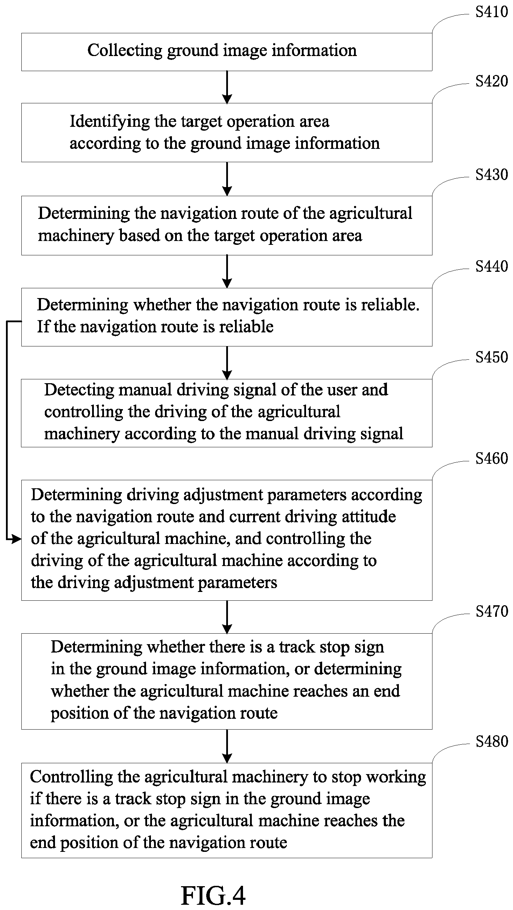

FIG. 4 illustrates a view-based agricultural machinery driving method in accordance with another embodiment of the present disclosure.

As shown in FIG. 4, the method includes the following steps:
At step S410, collecting ground image information.

At step S420, identifying the target operation area according to the ground image information.

At step S430, determining the navigation route of the agricultural machinery based on the target operation area.

At step S440, determining whether the navigation route is reliable. If the navigation route is reliable, step S460 is implemented, otherwise step S450 is implemented.

At step S450, detecting manual driving signal of the user and allowing manual driving of the agricultural machinery according to the manual driving signal.

At step S460, determining driving adjustment parameters according to the navigation route and current driving attitude of the agricultural machine, and controlling the driving of the agricultural machine according to the driving adjustment parameters.

At step S470, determining whether there is an end-of-path stop sign in the ground image information, or determining whether the agricultural machine reaches an end position of the navigation route.

The stop sign is used to mark the areas where the agricultural machinery is not allowed to travel, such as planting areas where harvesting is not required and areas where the agricultural machinery should not travel, so as to avoid operation errors or risk of accidents. The stop sign can be a sign specially set for the automatic driving of the agricultural machinery, or a special feature of the terrain, or traffic sign. A stop sign is set on the ground in the area where the agricultural machinery is prohibited. A stop sign identification algorithm is preset in the processing module of the agricultural machinery to identify such stop sign of the ground image information. The deep learning model can also be used to identify the stop sign, the deep learning model used here is not the same as the deep model for identifying the target operation area.

In order to ensure that the agricultural machinery can stop driving in time when the operation is completed or there is deviation from the path or obstacles encountered, detection of a stop sign is required and whether the agricultural machinery reaches the end position of the navigation route.

At step S480, controlling the agricultural machinery to stop working if it meets a stop sign in the ground image information, or when the agricultural machine reaches the end position of the navigation route.

When it is determined that there is a stop sign in the ground image information or that the agricultural machinery has driven to the end position of the navigation route, it is necessary to stop the agricultural machinery in time. When the processing module detects a meeting with the stop sign or when the agricultural machinery has driven to the end position of the navigation route, it sends a termination signal in time to cut off the power output of the agricultural machinery and apply brake.

The view-based agricultural machinery driving method of the embodiment of the present disclosure can assist the process of the target operation area identification according to GPS positioning information when the ground image information does not meet the identification requirements, and further ensure the safety and stability of automatic driving. The method can also determine the driving adjustment parameters according to the navigation route, and provide the process of stopping according to the stop sign or end of navigation route, so as to ensure that the agricultural machinery will not enter the non-operation area by mistake, improving the safety of automatic driving of the agricultural machinery.

Embodiment 3

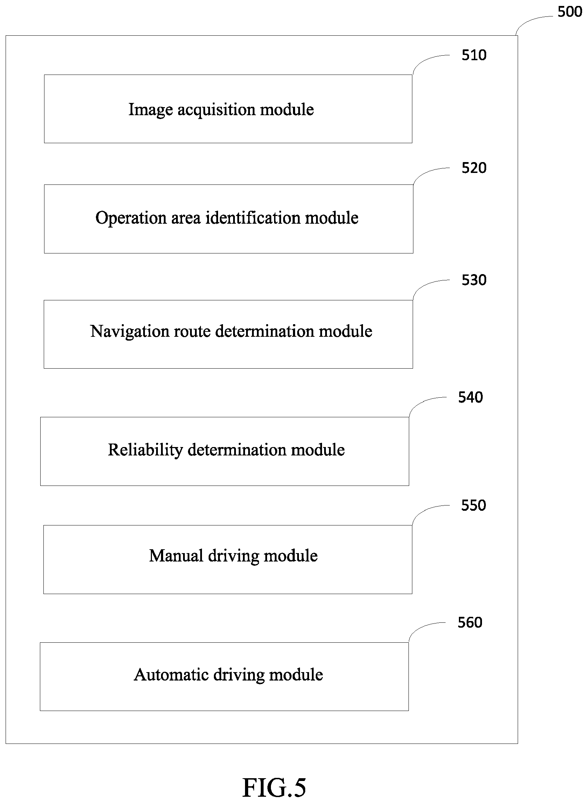

FIG. 5 illustrates a view-based agricultural machinery driving system 500 in accordance with another embodiment of the present disclosure. The view-based agricultural machinery driving system 500 provided in Embodiment 3 of the present disclosure can execute the view-based agricultural machinery driving method provided in any embodiment of the present disclosure, and has the corresponding functional modules and beneficial effects of the execution method.

As shown in FIG. 5, the view-based agricultural machinery driving system 500 includes an image acquisition module 510, an operation area identification module 520, a navigation route determination module 530, a reliability determination module 540, a manual driving module 550, and an automatic driving module 560.

The image acquisition module 510 is used to collect the ground image information.

The operation area identification module 520 is used to identify the target operation area according to the ground image information.

The navigation route determination module 530 is used to determine the navigation route of the agricultural machinery based on the target operation area.

The reliability determination module 540 is used to determine whether the navigation route is reliable.

The manual driving module 550 is used to detect the manual driving signal of the user to control the driving of the agricultural machinery according to the manual driving signal.

The automatic driving module 560 is used to determine the driving adjustment parameters according to the navigation route and the current driving attitude of the agricultural machine, so as to control the driving of the agricultural machine according to the driving adjustment parameters.

Alternatively, in some embodiments, the operation area identification module 520 is specifically used for: segmenting semantics the ground image information through a preset depth learning model to obtain a plurality of ground areas, and identifying the target operation area in the plurality of ground areas.

Alternatively, in some embodiments, the operation area identification module 520 is specifically used for: determining whether the ground image information meets the identification requirements, obtaining the GPS positioning information of the agricultural machinery and identifying the target operation area based on the GPS positioning information and the ground image information if the ground image information does not meet the identification requirements.

Alternatively, in some embodiments, the determining of whether the ground image information meets the identification requirements can include: determining whether the ground feature information of the ground image information is accurate and continuous. If information concerning the ground features of the ground image information is inaccurate or discontinuous, the ground image information does not meet the identification requirements.

Alternatively, in some embodiments, the reliability determination module 540 is specifically used for: determining whether the navigation route traverses the target operation area completely and can complete the operation task corresponding to the target operation area, determining that the navigation route is reliable if the navigation route traverses the target operation area completely and can complete the operation task corresponding to the target operation area.

Alternatively, in some embodiments, the automatic driving module 560 is specifically used for: detecting the current course of the agricultural machinery, determining driving course deviation between the current course and the navigation route, and determining the driving steering angle and the offset distance of the agricultural machine based on the driving course deviation and the driving parameters of the agricultural machine.

Alternatively, in some embodiments, the view-based agricultural machinery driving system 500 further includes a termination detection module and a stop module.

The termination detection module is used to determine whether there is a stop sign in the ground image information, or when the agricultural machine reaches the termination of the navigation route.

The stop module is used to control the agricultural machinery to stop working if there is a stop sign in the ground image information, or when the agricultural machine reaches the termination of the navigation route.

The view-based agricultural machinery driving system of the embodiment of the present disclosure can plan the navigation route according to the collected ground image information in the process of agricultural machinery operation, so as to carry out automatic driving operation. The system introduces assessments of reliability in the process of automatic driving, and finds and switches to manual driving in time when the navigation route is unreliable, reduces the accidents caused by automatic driving to a certain extent, and switches seamlessly to manual driving when automatic driving cannot be carried out, does not affect the normal operation of the agricultural machinery, and improves the operation efficiency of the agricultural machinery.

### Embodiment 4

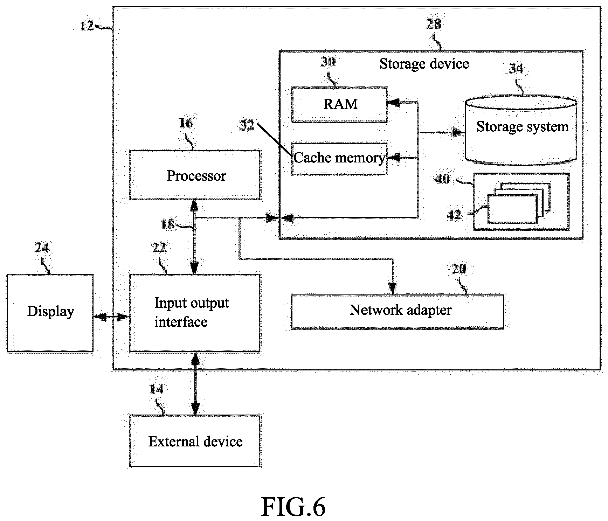

FIG. 6 illustrates an agriculture machinery device 12 in accordance with another embodiment of the present disclosure. FIG. 6 shows a block diagram of an exemplary agricultural machinery device 12 suitable for implementing an embodiment of the present disclosure. The agricultural machinery device 12 shown in FIG. 6 is only an example and should not impose any restrictions on the function and scope of use of the embodiment of the present disclosure.

As shown in FIG 6, the agricultural machinery device 12 is represented in the form of general computing device. The components of the agricultural machinery device 12 may include, but are not limited to, one or more processors 16 or a processing unit, a system storage device 28, and a bus 18 connecting different system components (including the system storage device 28 and the processor 16).

The bus 18 represents one or more of several types of bus structures, including storage device bus or storage device controller, peripheral bus, graphics acceleration port, processor or local bus, using any of a variety of bus structures. For example, these architectures include but are not limited to industry standard architecture (ISA) bus, microchannel architecture (MAC) bus, enhanced ISA bus, video electronics standards association (VESA) local bus, and peripheral component interconnection (PCI) bus.

The agricultural machinery device 12 typically includes a variety of computer system readable storage medium. These mediums can be any available medium that can be accessed by the agricultural machinery device 12, including volatile medium and non-volatile medium, removable medium and non-removable medium.

The system storage device 28 may include a computer system readable medium in the form of volatile storage device, for example, random access memory (RAM) 30 and / or cache memory 32. The agricultural machinery device 12 may further include other removable / non removable, volatile / nonvolatile computer system storage medium. For example, the storage system 34 may be used to read and write non removable, non-volatile magnetic medium (not shown in FIG 6, commonly referred to as "hard disk drive"). Although not shown in FIG 6, a disk drive for reading and writing a removable nonvolatile disk (such as a "floppy disk") and an optical disk drive for reading and writing a removable nonvolatile optical disk (such as a CD-ROM, DVD-ROM, or other optical medium) may be provided. In these cases, each drive may be connected to bus 18 through one or more data medium interfaces. The storage device 28 may include at least one program product having a set (such as at least one) of program modules configured to perform the functions of various embodiments of the present disclosure.

The utility 40 has a set of programs of the program module 42 that can be stored, for example in the storage device 28. Such program modules 42 include, but are not limited to, an operating system, one or more applications, other program modules, and program data, and each or some combination of these examples may include an implementation of a network environment. The program module 42 typically performs functions and / or methods in the embodiments described in the present disclosure.

The agricultural machinery device 12 can also communicate with one or more external devices 14 (such as keyboard, pointing device, display 24, etc.), one or more devices that enable the user to interact with the agricultural machinery device 12, and / or any device that enables the agricultural machinery device 12 to communicate with one or more other computing devices (such as network card, modem, etc.), the communication being carried out through the input output interface 22. The agricultural machinery device 12 may also communicate with one or more networks (such as local area network (LAN), wide area network (WAN) and / or public network, such as the Internet) through the network adapter 20. As shown in FIG. 6, the network adapter 20 communicates with other modules of the agricultural machinery device 12 through the bus 18. It should be understood that although not shown in the figures, other hardware and / or software modules can be used in combination with the agricultural machinery device 12, including but not limited to: microcode, device driver, redundant processing unit, external disk drive array, RAID system, tape drive, data backup storage system, etc.

The processing unit 16 executes various functional applications and data processing by running programs stored in the system storage device 28, to realize the view-based agricultural machinery driving method provided by the embodiment of the present disclosure:
Collecting the ground information by images;
Identifying the target operation area according to the ground image information;
Determining the navigation route of the agricultural machinery based on the target operation area;
Determining whether the navigation route is reliable;
Detecting the manual driving signal of the user to control the driving of the agricultural machinery according to the manual driving signal if the navigation route is not reliable; and
Determining the driving adjustment parameters according to the navigation route and the current driving attitude of the agricultural machine and controlling the driving of the agricultural machine according to the driving adjustment parameters if the navigation route is reliable.

### Embodiment 5

The Embodiment 5 of the present disclosure also provides a computer readable storage medium. A computer program is stored on the computer readable storage medium, and when the computer program is executed by the processor or the processing unit, realizes the view-based agricultural machinery driving method provided by all the embodiments of the present disclosure:
Collecting the ground image information;
Identifying the target operation area according to the ground image information;
Determining the navigation route of the agricultural machinery based on the target operation area;
Determining whether the navigation route is reliable;
Detecting the manual driving signal of the user to control the driving of the agricultural machinery according to the manual driving signal if the navigation route is not reliable; and
Determining the driving adjustment parameters according to the navigation route and the current driving attitude of the agricultural machine and controlling the driving of the agricultural machine according to the driving adjustment parameters if the navigation route is reliable.

The computer readable storage medium of the embodiment of the present disclosure can adopt any combination of one or more computer readable media. The computer readable medium may be a computer readable signal medium or a computer readable storage medium. The computer readable storage medium may be, for example, but is not limited to, an electrical, magnetic, optical, electromagnetic, infrared, or semiconductor system, device, or device, or any combination of the above. More specific examples (a non-exhaustive list) of the computer readable storage media include: electrical connection with one or more wires, portable computer disk, hard disk, random access memory (RAM), read only memory (ROM), erasable programmable read only memory (EPROM or flash memory), optical fiber, portable compact disk read only memory (CD-ROM), optical storage device, magnetic storage device, or any suitable combination of the above. In the embodiment of the present disclosure, the computer readable storage medium may be any tangible medium containing or storing a program, which may be used by or in combination with an instruction execution system or device.

The computer readable signal medium may include a data signal propagating in the baseband or as part of the carrier wave, in which the computer readable program code is carried, this transmitted data signal can take many forms, including but not limited to, electromagnetic signal, optical signal or any suitable combination of the above. The computer readable signal medium may also be any computer readable media other than a computer readable storage medium. The computer readable medium may transmit, propagate, or transmit a program for use by or in combination with an instruction execution system or device.

The program code contained on the computer readable medium can be transmitted to or from any suitable medium, including but not limited to wireless, wire, optical cable, RF, etc., or any suitable combination of the above.

Computer program code for performing the operations of the present disclosure may be written in one or more programming languages or a combination thereof. The programming languages include object-oriented programming languages such as Java, Smalltalk, C + +, and conventional procedural programming languages such as "C" language or similar programming languages. The program code can be executed entirely on the user's computer, partially on the user's computer as a separate software package, partially on the user's computer, partially on the remote computer, or entirely on the remote computer or server. In the case of a remote computer, the remote computer may be connected to the user computer through any kind of network, including a local area network (LAN) or a wide area network (WAN), or may be connected to an external computer (such as using an Internet service provider to connect through the Internet).

Those skilled in the art should understand that the above description and the embodiments of the present disclosure shown in the drawings are only examples and do not limit the present disclosure. The purpose of the present disclosure has been completely and effectively achieved. The functions and structural principles of the present disclosure have been shown and explained in the embodiments. Without departing from the principles, the implementation of the present disclosure may have any deformation or modification.

## Claims

1. A view-based agricultural machinery driving method comprising:
collecting ground image information;
identifying a target operation area according to the ground image information;
determining navigation route of the agricultural machinery based on the target operation area;
determining whether the navigation route is reliable;
detecting manual driving signal of the user and controlling the driving of the agricultural machinery according to the manual driving signal if the navigation route is not reliable; and
determining driving adjustment parameters according to the navigation route and current driving attitude of the agricultural machine and controlling the driving of the agricultural machine according to the driving adjustment parameters if the navigation route is reliable.

2. The method according to claim 1, wherein identifying a target operation area according to the ground image information, comprises:
segmenting semantics the ground image information through a preset deep learning model to obtain a plurality of ground areas identifying the target operation area in the plurality of ground areas.

3. The method according to claim 1, wherein identifying a target operation area according to the ground image information, comprises:
determining whether the ground image information meets identification requirements; and
obtaining GPS positioning information of the agricultural machinery and identifying the target operation area according to the GPS positioning information and the ground image information if the ground image information does not meet the identification requirements.

4. The method according to claim 3, wherein determining whether the ground image information meets identification requirements, comprises:
determining whether ground feature information of the ground image information is accurate and continuous; and
determining the ground image information does not meet the identification requirements if the ground feature information of the ground image information is inaccurate or discontinuous.

5. The method according to claim 1, wherein determining whether the navigation route is reliable, comprises:
determining whether the navigation route traverses the target operation area and completes operation task corresponding to the target operation area;
determining the navigation route is reliable if the navigation route traverses the target operation area and completes the operation task corresponding to the target operation area.

6. The method according to claim 5, wherein determining driving adjustment parameters according to the navigation route and current driving attitude of the agricultural machine, comprises:
detecting current course of the agricultural machinery;
determining driving course deviation between the current course and the navigation route, and
determining driving steering angle and offset distance of the agricultural machine based on the driving course deviation and the driving parameters of the agricultural machine.

7. The method according to claim 1, further comprising:
determining whether there is a track stop sign in the ground image information, or whether the agricultural machine reaches an end position of the navigation route; and
controlling the agricultural machine to stop working if there is a track stop sign in the ground image information, or the agricultural machine reaches an end position of the navigation route.

8. An agricultural machinery device comprising:
a storage device; and
at least one processor, wherein the storage device stores one or more programs, when executed by the at least one processor, the one or more programs cause the at least one processor to:
determine navigation route of the agricultural machinery based on the target operation area; and
determine whether the navigation route is reliable;
detect manual driving signal of the user and control the driving of the agricultural machinery according to the manual driving signal if the navigation route is not reliable; and
determine driving adjustment parameters according to the navigation route and current driving attitude of the agricultural machine and control the driving of the agricultural machine according to the driving adjustment parameters if the navigation route is reliable.

9. The agricultural machinery device according to claim 8, wherein the at least one processor is further caused to:
segment semantics the ground image information through a preset deep learning model to obtain a plurality of ground areas, and identify the target operation area in the plurality of ground areas.

10. The agricultural machinery device according to claim 8, wherein the at least one processor is further caused to:
determine whether the ground image information meets identification requirements; and
obtain GPS positioning information of the agricultural machinery and identify the target operation area according to the GPS positioning information and the ground image information if the ground image information does not meet the identification requirements.

11. The agricultural machinery device according to claim 10, wherein the at least one processor is further caused to:
determine whether ground feature information of the ground image information is accurate and continuous; and
determine the ground image information does not meet the identification requirements if the ground feature information of the ground image information is inaccurate or discontinuous.

12. The agricultural machinery device according to claim 8, wherein the at least one processor is further caused to:
determine whether the navigation route traverses the target operation area and completes operation task corresponding to the target operation area;
determine the navigation route is reliable if the navigation route traverses the target operation area and completes the operation task corresponding to the target operation area.

13. The agricultural machinery device according to claim 12, wherein the at least one processor is further caused to:
detect current course of the agricultural machinery;
determine driving course deviation between the current course and the navigation route, and
determine driving steering angle and offset distance of the agricultural machine based on the driving course deviation and the driving parameters of the agricultural machine.

14. The agricultural machinery device according to claim 8, wherein the at least one processor is further caused to:
determine whether there is a track stop sign in the ground image information, or whether the agricultural machine reaches an end position of the navigation route; and
control the agricultural machine to stop working if there is a track stop sign in the ground image information, or the agricultural machine reaches an end position of the navigation route.

15. A non-transitory storage medium having stored thereon instructions that, when executed by a processor of a computer device installed in an agricultural machinery device, causes the processor to perform a view-based agricultural machinery driving method, wherein the method comprises:
collecting ground image information;
identifying a target operation area according to the ground image information;
determining navigation route of the agricultural machinery based on the target operation area;
determining whether the navigation route is reliable;
detecting manual driving signal of the user and controlling the driving of the agricultural machinery according to the manual driving signal if the navigation route is not reliable; and
determining driving adjustment parameters according to the navigation route and current driving attitude of the agricultural machine and controlling the driving of the agricultural machine according to the driving adjustment parameters if the navigation route is reliable.
